# EUROPEAN PATENT APPLICATION

(11) **EP 4 394 220 A1**
(43) Date of publication of application: **03.07.2024**
(21) Application number: 23217074.6
(22) Date of filing: 15.12.2023
(51) Int. Cl.: F16K 1/36, F16K 1/42, F16K 1/48, F16K 1/54, F16K 31/04, F16K 31/50

(54) **ELECTRIC VALVE**

(30) Priority: 27.12.2022 JP 2022210633
(71) Applicant: Fujikoki Corporation, Tokyo 158-0082 (JP)
(72) Inventor: OE, Yuma, Tokyo, 158-0082 (JP); YAZAWA, Masashi, Tokyo, 158-0082 (JP)
(74) Representative: Ter Meer Steinmeister & Partner

(57) **Abstract**

An electric valve (100, 100A) includes a valve main body (10) having a valve seat (11b); a tubular can (45) joined to the valve main body (10); a rotor (30) disposed inside the can (45); a valve shaft (20) that rotates integrally with the rotor (30); a guide member (15) into which the valve shaft (20) is inserted; a valve shaft ascending and descending drive mechanism (22) having a feeding screw mechanism provided between the guide member (15) and the valve shaft (20); and a valve body (25) that is connected to the valve shaft (20), moves in a direction approaching or moving away from the valve seat (11b) in conjunction with ascending and descending of the valve shaft (20), and has a curved seating surface (25e) bulging toward the valve seat (11b).

## Description

### BACKGROUND

### Technical Field

The present disclosure relates to an electric valve.

### Related Art

Conventionally, as disclosed in Japanese Patent Application Laid-Open (JP-A) No. 2012-172839, there has been known an electric valve of a type that opens and closes a valve port by moving a valve body connected to a rotating valve shaft in a direction approaching or moving away from a valve seat of a valve seat member along an axial direction of a rotating shaft using a feeding screw mechanism using rotation of a rotor. In the electric valve disclosed in JP-A No. 2012-172839, a seating surface in contact with the valve seat is formed on a part of a peripheral surface of a distal end of a truncated cone-shape on an outer surface of a rod-shaped valve body.

Patent Literature 1: Japanese Patent Application Laid-Open (JP-A) No. 2012-172839

### SUMMARY OF THE INVENTION

However, in the feeding screw mechanism of the electric valve, when a defect of interlocking such as rattling of a male screw portion and a female screw portion occurs, a state in which the rotating shaft and the shaft of the valve body cross each other, that is, axial deviation of the valve body may occur. In a state where the axial deviation of the valve body occurs, the shaft of the valve body is inclined with respect to a surface of the valve port.

Here, in JP-A No. 2012-172839, since the seating surface of the valve body is a peripheral surface having a truncated cone-shape, the shape of the seating surface is linear in a cross section including a rotation axis. The shape of the surface of the valve seat corresponding to the seating surface is also linear in the cross section. For this reason, when the shaft of the valve body is inclined with respect to the surface of the valve port due to the axial deviation of the valve body, when the valve shaft reaches a lowermost position toward the valve seat, a part of the peripheral surface of the seating surface approaches the valve seat, while the other part of the seating surface is likely to be separated from the valve seat.

That is, when the axial deviation of the valve body occurs, the peripheral surface of the seating surface does not uniformly come into contact with the valve seat in a circumferential direction. Therefore, in the case of JP-A No. 2012-172839 in which the shape of the seating surface in the cross section is linear, an interval between the seating surface of the valve body and the valve seat is likely to be widened. As a result, sealability of the valve seat is reduced, and thus, a fluid entering and exiting the electric valve leaks from the valve port, that is, a so-called valve leak occurs. Therefore, flow rate controllability of the electric valve is deteriorated.

In view of the above, the disclosure provides an electric valve having excellent flow rate controllability.

An electric valve according to a first aspect includes: a valve main body having a valve seat; a tubular can joined to the valve main body; a rotor disposed inside the can; a valve shaft that rotates integrally with the rotor; a guide member into which the valve shaft is inserted; a valve shaft ascending and descending drive mechanism having a feeding screw mechanism provided between the guide member and the valve shaft; and a valve body that is connected to the valve shaft, moves in a direction approaching or moving away from the valve seat in conjunction with ascending and descending of the valve shaft, and has a curved seating surface bulging toward the valve seat.

In the electric valve according to the first aspect, the valve body has a curved seating surface bulging toward the valve seat. That is, the shape of the seating surface in the cross section is an arc shape. For this reason, for example, as compared with a valve body having a truncated cone-shaped peripheral surface, in which a length of a linear portion of the seating surface in the cross section is a length of a chord corresponding to the same arc as an arc of the seating surface of the electric valve according to the first aspect, even when the valve body is inclined at the time of axial deviation, the interval between the seating surface and the valve seat becomes short. As a result, even when a gap is formed between the seating surface of the valve body and the valve seat, the gap can be suppressed to be small. Therefore, since the sealability of the valve seat can be improved, valve leakage can be suppressed.

According to a second aspect, in the electric valve according to the first aspect, the electric valve further includes a rotation support member having a curved base that supports a base portion of the valve body such that a distal end of the valve body is rotatable about the base portion side of the valve body.

In the second aspect, the distal end of the valve body is rotatable about the base portion side of the valve body. Even when the axial deviation of the valve body occurs, the valve body descends while the distal end of the valve body rotates about the base portion side, so that the distal end of the valve body can be easily brought into contact with the valve seat. That is, the inclination range that can be handled when the valve body is inclined due to the axial deviation of the valve body is expanded.

According to a third aspect, in the electric valve according to the second aspect, in a cross section including a rotation axis, a center of a first virtual circle including a curve of a contour of the curved base of the rotation support member and a center of a second virtual circle including a curve of a contour of the curved seating surface of the valve body overlap at a same position.

In the third aspect, in the cross section including the rotation axis, the center of the virtual circle including the curve of the contour of the curved portion of the rotation support member and the center of the virtual circle including the curve of the contour of the curved seating surface of the valve body overlap at the same position. Therefore, even when the distal end of the valve body rotates, the curved seating surface moves on the same circumference, so that the valve body can be easily seated reliably on the valve seat. Therefore, the effect of suppressing the valve leakage is high even when the axial deviation of the valve body occurs.

According to a fourth aspect, in the electric valve according to the second aspect or the third aspect, the base portion of the valve body is provided with a curved sliding protrusion protruding toward a surface at a side in contact with the curved base of the rotation support member, and the curved base of the rotation support member has a curved base recess fitted to the curved sliding protrusion at a surface on a side supporting the base portion of the valve body.

In the fourth aspect, the base portion of the valve body has a curved sliding protrusion protruding toward a surface at a side in contact with the base of the rotation support member. The base of the rotation support member has a curved base recess fitted to the sliding protrusion at a surface on a side supporting the base portion of the valve body.

When a recess to be fitted to the protruding portion of the base is provided on the base portion side, it is necessary to provide a reduced diameter portion having a thickness equal to or larger than a depth of the recess at the end portion of the base portion on the base side in order to secure a movable range of the base portion of the valve body on the rotating side. That is, the length of the base portion is extended by the amount of the reduced diameter portion. The reduced diameter portion is often required from the viewpoint of suppressing a decrease in strength of the base portion due to the recess.

Therefore, when the curvature radii of the recesses are the same, the length of the valve body can be shortened by an amount that does not require the length of the reduced diameter portion as compared with the case where the recesses are provided on the base portion side. As a result, the entire length of the electric valve can be suppressed. The cost of the member can be reduced.

According to a fifth aspect, in the electric valve according to the second aspect or the third aspect, the curved base of the rotation support member is provided with a curved base protrusion protruding toward the base portion of the valve body, and the base portion of the valve body has a reduced diameter portion in which a recess for sliding fitted to the curved base protrusion is formed at a surface on a side in contact with the curved base of the rotation support member.

In the fifth aspect, the base of the rotation support member is provided with a curved base protrusion protruding toward the base portion of the valve body. The base portion of the valve body has a reduced diameter portion in which a recess for sliding fitted to the base protrusion is formed as a curved portion at a surface on a side in contact with the base of the rotation support member. Therefore, since there is no need to partially reduce the thickness of the base as compared with the case where the recess is provided on the base side, the strength of the base does not decrease.

A sixth aspect is the electric valve according to any one of the first to fifth aspects, further including a stator that is attached to an outer side of the can and rotationally drives the rotor.

According to the electric valve of the disclosure, it is possible to provide an electric valve having excellent flow rate controllability.

### BRIEF DESCRIPTION OF THE DRAWINGS

Fig. 1 is a cross-sectional view illustrating an electric valve according to an embodiment of the disclosure taken along a plane including a rotation axis;
Fig. 2 is a view illustrating a contact portion of a rotation support member and a valve body in the electric valve according to the present embodiment by cutting a valve seat member;
Fig. 3 is an enlarged view of a portion D in Fig. 2;
Fig. 4 is a cross-sectional view for explaining an operation of the electric valve according to the present embodiment (part 1);
Fig. 5 is a cross-sectional view for explaining the operation of the electric valve according to the present embodiment (part 2);
Fig. 6 is a cross-sectional view for explaining the operation of the electric valve according to the present embodiment (part 3); and
Fig. 7 is a cross-sectional view for explaining an electric valve according to a modification of the present embodiment.

### DETAILED DESCRIPTION OF THE INVENTION

Hereinafter, the present embodiment will be described. In the following description of the drawings, the same reference numerals or similar reference numerals are assigned to the same portions and similar portions. However, the drawings are schematic, and the relationship between the thickness and the plane dimension, the ratio of the thickness of each device and each member, and the like are different from actual ones. Therefore, specific thicknesses and dimensions should be determined in consideration of the following description. The drawings include portions having different dimensional relationships and ratios. Unless otherwise specified in the specification, the number of each component of the disclosure is not limited to one, and a plurality of components may be present.

### <Configuration of Electric Valve>

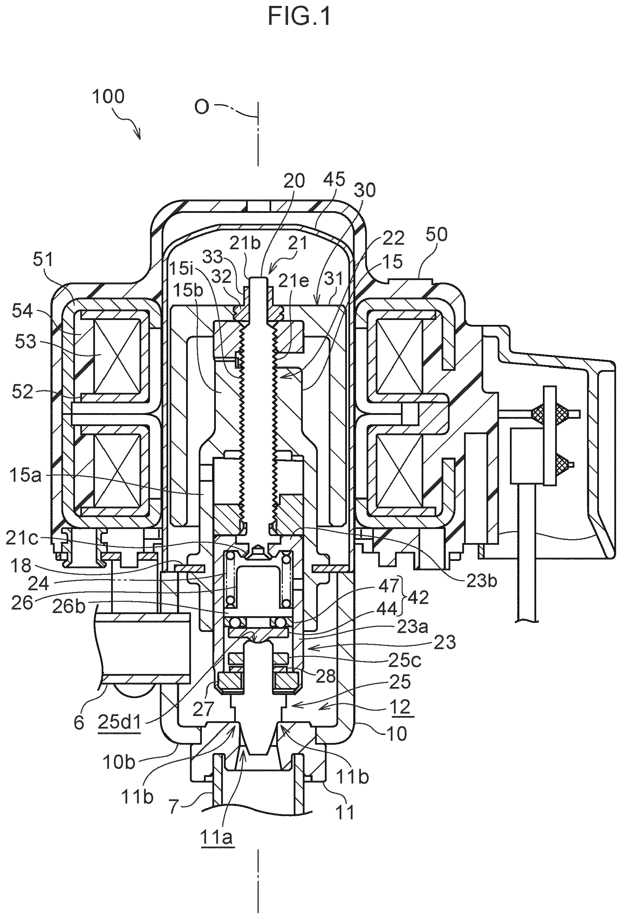

As illustrated in Fig. 1, an electric valve 100 according to the present embodiment includes a valve main body 10, a can 45, a rotor 30, a stator 50, a valve shaft 20, a guide member 15, a valve shaft ascending and descending drive mechanism 22, and a valve body 25. The electric valve 100 further includes a rotation support member 42.

### (Valve Shaft Ascending and Descending Drive Mechanism)

In the present embodiment, the valve shaft ascending and descending drive mechanism 22 for ascending and descending the valve shaft 20 can be configured by the rotor 30, the stator 50, a female screw portion 15i of the guide member 15, and a male screw portion 21e of the valve shaft 20 in a broad sense. The valve shaft ascending and descending drive mechanism 22 includes a feeding screw mechanism in a narrow sense, and can be configured by the female screw portion 15i of the guide member 15 and the male screw portion 21e of the valve shaft 20. That is, in the present embodiment, the valve shaft 20 is a movable screw, and the guide member 15 is a fixing screw. The valve shaft ascending and descending drive mechanism 22 is provided between the guide member 15 and the valve shaft 20.

### (Valve Main Body)

The valve main body 10 is a bottomed cylindrical member whose upper surface is opened. The valve main body 10 has a valve seat 11b. The valve main body 10 can be manufactured by press working using, for example, a metal plate material as a material. A valve seat member 11 having a valve port 11a as an orifice and a valve seat 11b is fixed to a bottom portion 10b of the valve main body 10 by brazing or the like.

A lower portion of the guide member 15 is inserted into an upper portion of the valve main body 10. A flange-shaped disk 18 is placed on the upper portion of the valve main body 10 in Fig. 1. As in a welded portion 46 illustrated in Fig. 1, a lower end portion of the can 45 is fixed by welding to a step portion formed by the flange-shaped disk 18 and the upper portion of the valve main body 10.

A first inlet/outlet 6 including a pipe joint is joined to the left side of a valve chamber 12 of the valve main body 10 in Fig. 1 by brazing or the like. Similarly, a second inlet/outlet 7 including a pipe joint is joined to the valve seat member 11 by brazing or the like.

### (Can)

The can 45 has a tubular shape. The lower end portion of the can 45 in Fig. 1 is joined to the valve main body 10, whereby the can 45 is sealed.

### (Rotor)

The rotor 30 is disposed inside the can 45. The rotor 30 includes a cylindrical magnet 31 and a disk-shaped ceiling portion 32 integrally coupled to the magnet 31. A hole fitted to an upper small diameter portion 21b of the valve shaft 20 is formed at the center of the ceiling portion 32. That is, the rotor 30 is fixed to an upper portion of the valve shaft 20 in Fig. 1. Like a welded portion 33 illustrated in Fig. 1, the ceiling portion 32 is fixed to the upper small diameter portion 21b by welding in a state of being placed on a valve closing direction movable stopper 35 screwed to the male screw portion 21e.

### (Stator)

The stator 50 is fitted to an outer periphery of the can 45. That is, the stator 50 is disposed on an outer side of the can 45. The stator 50 includes a yoke 51, a bobbin 52, a coil 53, a resin mold 54, and the like. A positioning fixture 58 is provided at a bottom portion of the stator 50. The stator 50 is positioned and fixed at a predetermined position with respect to the valve main body 10 by the positioning fixture 58. The stator 50 and the rotor 30 configure, for example, a stepping motor. The stator 50 rotationally drives the rotor 30.

In the electric valve 100 according to the present embodiment, when the rotor 30 rotates, the valve shaft 20 rotates integrally with the rotation of the rotor 30. When the valve shaft 20 rotates, the valve shaft 20 ascends and descends together with the valve body 25 by the feeding screw mechanism. A passage flow rate of a refrigerant is adjusted by the ascending and descending of the valve body 25. In the present embodiment, a case where a fluid is a refrigerant has been exemplified, but the fluid is not limited to the refrigerant in the disclosure.

### (Valve Shaft)

The valve shaft 20 rotates integrally with the rotor 30. The valve shaft 20 is screwed into the female screw portion 15i formed in a small diameter portion 15b of the guide member 15. Specifically, the valve shaft 20 includes a male screw member 21, a valve holder 23, and a valve body 25. The male screw member 21 includes a male screw portion 21e screwed into the female screw portion 15i of the guide member 15, and an upper small diameter portion 21b having a smaller diameter than an outer diameter of the male screw portion 21e.

### (Valve Holder)

The valve holder 23 is a cylindrical member. A ceiling hole portion of the valve holder 23 is connected in a state of being fixed to a caulking portion 21c located at a lower end of the male screw member 21 in Fig. 1. The valve holder 23 has a ceiling portion 23b slidably inserted into a large-diameter cylindrical body portion 15a of the guide member 15. The large-diameter cylindrical body portion 15a of the guide member 15 corresponds to a cylindrical portion of the disclosure.

Inside a support cylindrical portion 23a of the valve holder 23, a ring-shaped holding portion 27 is fixed to a lower end portion of the valve holder 23 in Fig. 1 by press fitting, welding, or the like. On the upper side of the holding portion 27 in Fig. 1, a ring-shaped washer 28 is disposed in a state where a position of a central hole of the washer 28 is aligned with a position of a central hole of the holding portion 27.

### (Guide Member)

A stem guide as the guide member 15 has the large-diameter cylindrical body portion 15a into which the valve shaft 20 is inserted. The guide member 15 has a flange-shaped disk 18 fixed to an upper portion of an upper end surface of the valve main body 10 in Fig. 1 by welding or the like.

### (Valve Body)

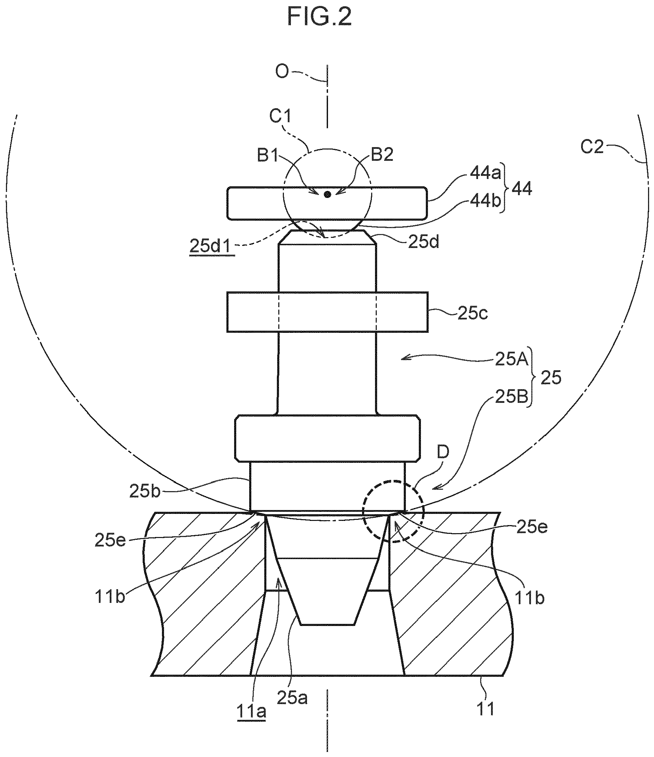

As illustrated in Fig. 1, an upper portion of the valve body 25 is slidably inserted into a lower portion of the support cylindrical portion 23a of the valve holder 23. The valve body 25 is connected to the valve shaft 20 inside the large-diameter cylindrical body portion 15a of the guide member 15. The valve body 25 moves in a direction approaching or moving away from the valve seat 11b in conjunction with the ascending and descending of the valve shaft 20. As illustrated in Fig. 2, the valve body 25 has a base portion 25A and a distal end 25B.

### (Base Portion)

The base portion 25A of the valve body 25 is provided with a flange-shaped portion 25c having an outer diameter larger than a diameter of the base portion 25A. The flange-shaped portion 25c is located on an upper side of the washer 28. In the present embodiment, the flange-shaped portion 25c is a push nut attached to the base portion 25A. In the disclosure, the flange-shaped portion may be manufactured integrally with the base portion 25A, for example.

The base portion 25A of the valve body 25 has a reduced diameter portion 25d in which a recess for sliding 25d1 fitted to a base protrusion 44b is formed at a surface on a side in contact with a base 44a of a contact portion 44 of the rotation support member 42. The base portion 25A of the valve body 25 is slidable with respect to the contact portion 44 of the rotation support member 42.

### (Distal End)

The distal end 25B of the valve body 25 includes, in order from the lower side in Fig. 1, a truncated cone-shaped portion 25a inserted into the valve port 11a, and a cylindrical body portion 25b having a larger diameter than the truncated cone-shaped portion 25a. The valve body 25 has a curved seating surface 25e bulging toward the valve seat 11b on a part of the peripheral surface of the distal end 25B.

### (Seating Surface)

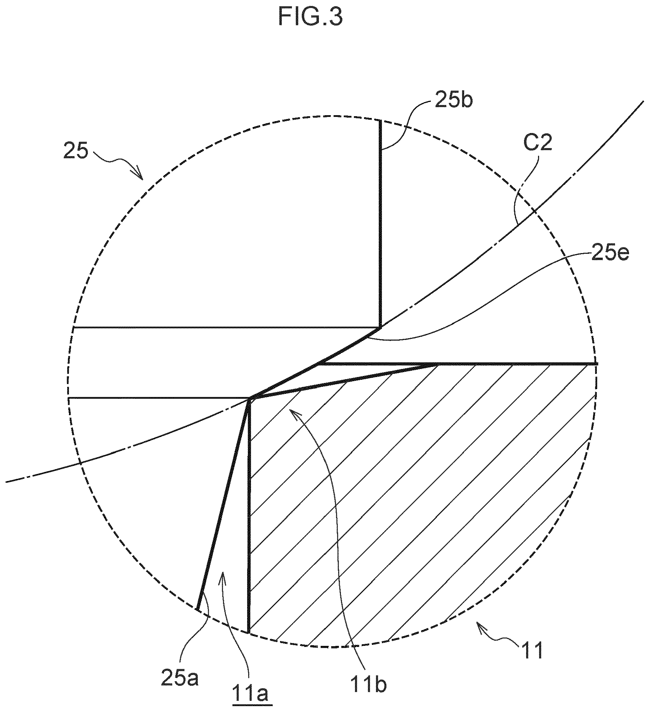

As illustrated in Figs. 2 and 3, in the present embodiment, the curved seating surface 25e is formed on one spherical surface. In the disclosure, the curved seating surface 25e is not limited to a spherical surface, and may be a curved surface such as an elliptical spherical surface or a conical surface.

In the present embodiment, a contour of the curved seating surface 25e illustrated in the drawings is smoothly drawn. However, in the disclosure, the curved seating surface 25e may be microscopically configured by a plurality of steps.

### (Rotation Support Member)

The rotation support member 42 is disposed on the upper surface of the valve body 25 in Fig. 1. A circular thick plate-shaped spring receiving member 26 having a flange-shaped portion 26b is disposed on the rotation support member 42 in Fig. 1. Between the flange-shaped portion 26b of the spring receiving member 26 and the ceiling portion 23b of the valve holder 23, a compression coil spring 24 serving as both for valve closing and for buffering is disposed in a contracted state.

In other words, a lower winding end of the compression coil spring 24 in Fig. 1 is in contact with the spring receiving member 26. The rotation support member 42 is disposed between the spring receiving member 26 and the valve body 25. The valve body 25 is constantly biased downward in Fig. 1 by the compression coil spring 24 via the rotation support member 42.

The rotation support member 42 includes a contact portion 44 and a displacement absorbing portion 47. The distal end 25B of the valve body 25 is rotatable about the base portion 25A side of the valve body 25 by the rotation support member 42.

### (Contact Portion)

The contact portion 44 includes a base 44a and a base protrusion 44b provided on the base 44a. The contact portion 44 of the present embodiment is, for example, a disk-shaped washer. In the disclosure, the contact portion 44 is not limited to the washer, and can be appropriately changed as long as the valve body 25 can be rotatably supported in a state of being in contact with the valve body 25.

### (Base and Base Protrusion)

The base 44a is a disk-shaped member. The base protrusion 44b is provided at a center of a lower surface of the base 44a. As illustrated in Fig. 2, the surface of the base protrusion 44b, that is, the lower surface in Fig. 2 is curved.

The base protrusion 44b protrudes toward the base portion 25A of the valve body 25. In a state where the recess for sliding 25d1 of the valve body 25 is fitted to the surface of the curved base protrusion 44b, the base 44a supports the base portion 25A of the valve body 25.

In the present embodiment, the base 44a and the base protrusion 44b are integrally manufactured. In the disclosure, the base 44a and the base protrusion 44b may be manufactured separately and then integrated by being joined.

### (Displacement Absorbing Portion)

The displacement absorbing portion 47 absorbs sliding of the valve body 25 in a circumferential direction, that is, displacement in the circumferential direction. The displacement absorbing portion 47 of the present embodiment is, for example, a thrust bearing. In the disclosure, the displacement absorbing portion 47 is not limited to the thrust bearing. In the disclosure, the displacement absorbing portion 47 is not essential.

In the present embodiment, the sliding of the valve body 25 in the circumferential direction is absorbed not by a contact surface of the contact portion 44 with the washer but by a thrust bearing as the displacement absorbing portion 47 and the spring receiving member 26. That is, a load in an axial direction is not applied to the contact portion 44 that is in direct contact with the valve body 25. Therefore, it is possible to achieve both the durability of the contact portion 44 and the alignment property of aligning the rotation center of the valve body 25 on a rotation axis O at the time of axial deviation.

### (First Virtual Circle and Second Virtual Circle)

As illustrated in Fig. 2, in the present embodiment, in the cross section including the rotation axis O, in a state where the rotation axis O and the shaft of the valve body 25 are aligned without being shifted, a center B1 of a first virtual circle C 1 and a center B2 of a second virtual circle C2 overlap at the same position. That is, the first virtual circle C 1 and the second virtual circle C2 are concentric circles. The first virtual circle C1 includes the recess for sliding 25d1 of the valve body 25 and a curve of a contour of the curved base protrusion 44b of the contact portion 44 of the rotation support member 42. The second virtual circle C2 includes a curve of a contour of the curved seating surface 25e of the valve body 25. In the disclosure, the position of the center of the first virtual circle C1 and the position of the center of the second virtual circle C2 may be different.

### <Operation of Electric Valve>

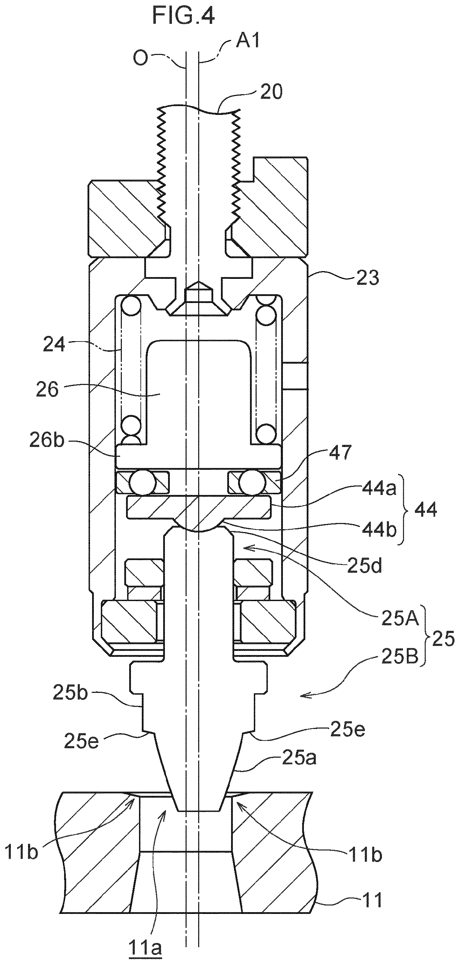

Next, an operation of the electric valve 100 according to the present embodiment will be described with reference to Figs. 4 to 6.

### (Operation in Normal State)

In the electric valve 100 according to the present embodiment, the rotor 30 and the valve shaft 20 rotate, for example, clockwise in plan view by supplying a pulse serving as a valve closing direction drive pattern to the stator 50. Then, the valve shaft 20 and the valve closing direction movable stopper 35 descend while rotating by the valve shaft ascending and descending drive mechanism 22 using feeding screw including the female screw portion 15i and the male screw portion 21e. Then, when the valve body 25 is seated on the valve seat member 11, the valve port 11a is closed.

When the valve port 11a is closed, the valve closing direction movable stopper 35 has not yet come into contact with a valve closing direction fixing stopper 55, and as a result, the operation in which the rotor and the valve shaft descend while rotating is not stopped. The pulse supply is continued until the compression coil spring 24 is compressed by a predetermined amount. Therefore, the rotor 30, the valve shaft 20, the valve holder 23, and the like descend while further rotating while the valve body 25 is seated on the valve seat member 11.

Since the valve shaft 20 and the valve holder 23 descend with respect to the valve body 25, the compression coil spring 24 is compressed. Therefore, the descending force of the valve shaft 20 and the valve holder 23 is absorbed. When the compression amount of the compression coil spring 24 reaches a predetermined amount, the valve closing direction movable stopper 35 comes into contact with the valve closing direction fixing stopper 55. The rotor 30 and the valve shaft 20 reach a lowermost position. As a result, even when the pulse supply serving as the valve closing direction drive pattern is continued to the stator 50, the descending of the rotor 30 and the valve shaft 20 is forcibly stopped. Therefore, a valve closing state, that is, a fully closed state of the valve port 11a is formed.

Even after the valve port 11a is closed by the valve body 25, the rotation and descending of the rotor 30, the valve shaft 20, and the valve holder 23 are continued until the compression coil spring 24 is compressed by a predetermined amount. Therefore, since the valve body 25 is pressed against the valve seat member 11, valve leakage and the like can be reliably prevented.

By supplying a pulse serving as a valve opening direction drive pattern to the stator 50 from the fully closed state of the valve seat 11b, the rotor 30 and the valve shaft 20 rotate in an opposite direction, for example, counterclockwise. The valve shaft ascending and descending drive mechanism 22 causes the rotor 30, the valve shaft 20, the valve holder 23, and a valve opening direction movable stopper 36 to ascend while rotating. Then, when the compression coil spring 24 is extended by a predetermined amount, it returns to the original set state. When the valve body 25 is separated from the valve seat member 11, the valve port 11a is opened.

A lift amount (that is, a flow rate which is a valve opening degree) of the valve body 25 is determined according to a number of supply pulses to the stator 50. Furthermore, when the pulse supply is continued, a fully opened state of the valve port 11a is finally formed. The valve opening direction movable stopper 36 comes into contact with a valve opening direction fixing stopper 56. Therefore, the rotation and ascending of the rotor 30, the valve shaft 20, and the valve holder 23 are forcibly stopped.

### (Operation in Axial Deviation State)

However, as illustrated in Fig. 4, when a defect of interlocking of the screw portion such as rattling of the male screw portion and the female screw portion of the valve shaft ascending and descending drive mechanism 22 occurs, axial deviation of the valve body 25 occurs. In Fig. 4, an axis A1 of the valve body 25 shifted parallel to the right side from the rotation axis O is illustrated.

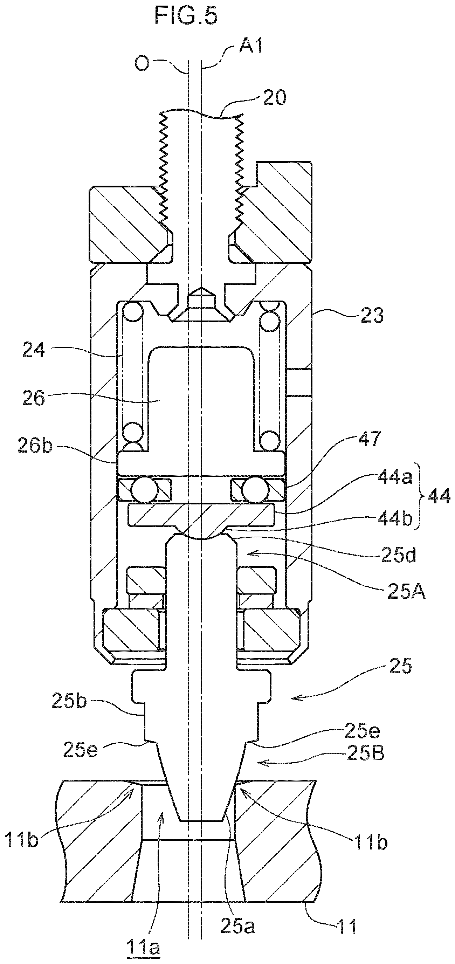

Next, as illustrated in Fig. 5, when the valve body 25 in the axial deviation state descends, a so-called partial contact state is formed in which the peripheral surface of the distal end 25B of the valve body 25 unevenly comes into contact with a part of the surface of the ring-shaped valve seat 11b.

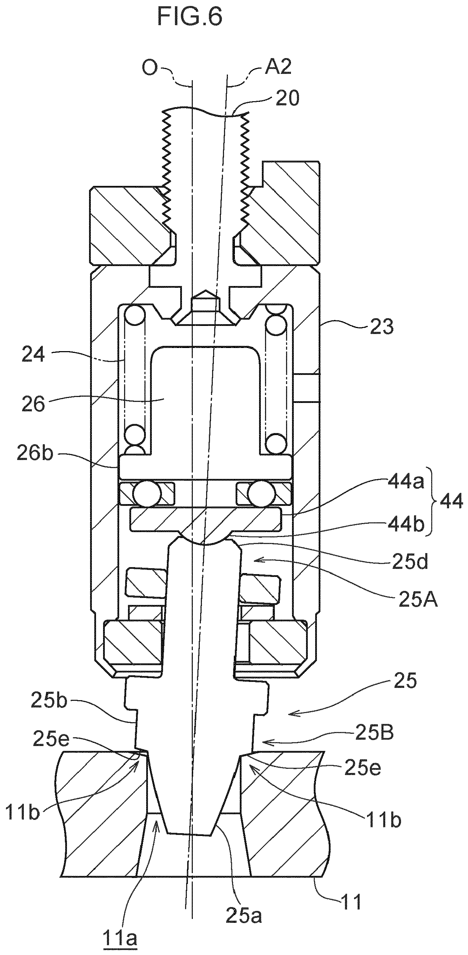

Next, as illustrated in Fig. 6, when the valve body 25 further descends in the partial contact state, the distal end 25B is rotated by the force applied from the valve seat 11b. Fig. 6 illustrates a state in which an axis A2 of the rotated valve body 25 intersects with the rotation axis O. The valve body 25 is seated on the valve seat 11b in a state of being inclined with respect to the rotation axis O.

In the present embodiment, since the seating surface 25e of the valve body 25 is curved, the interval between the seating surface 25e and the valve seat 11b is shortened as compared with a case where the shape of the seating surface in the cross section is linear. Therefore, even when the valve seat 11b does not entirely come into contact with the seating surface 25e as in the left seating surface 25e positioned above the right seating surface 25e in the valve body 25 in Fig. 6, it is possible to cover the gap formed between the seating surface 25e and the valve seat 11b or to reduce the gap.

In the present embodiment, since the seating surface 25e of the valve body 25 is curved, the valve body 25 receives a descending force after seating, so that the distal end 25B easily rotates about the base portion 25A side such that the distal end 25B is further inclined with respect to the rotation axis O. In the present embodiment, the truncated cone-shaped portion 25a at the distal end 25B in Fig. 6 rotates clockwise. Therefore, the peripheral surface of the truncated cone-shaped portion 25a of the left valve body 25 in Fig. 6 approaches the left valve seat 1 1b. That is, the peripheral surface of the truncated cone-shaped portion 25a can be brought into contact with the valve seat 11b, or the gap between the distal end 25B and the valve seat 1 1b can be reduced.

### (Action and Effect)

In the electric valve 100 according to the present embodiment, the valve body 25 has a curved seating surface 25e bulging toward the valve seat 11b. That is, the shape of the seating surface 25e in the cross section is an arc shape. Here, as a comparative example, a valve body having a truncated cone-shaped peripheral surface, for example, in which a length of a linear portion of the seating surface in the cross section is a length of a chord corresponding to the same arc as the arc of the seating surface 25e of the electric valve 100 according to the present embodiment is considered. In the present embodiment, as compared with the comparative example, even when the valve body 25 is inclined at the time of axial deviation, the interval between the seating surface 25e and the valve seat 11b becomes short. As a result, even when a gap is formed between the seating surface 25e of the valve body 25 and the valve seat 11b, the gap can be suppressed to be small. Therefore, since the sealability of the valve seat 11b can be improved, valve leakage can be suppressed. Therefore, the electric valve 100 having excellent flow rate controllability can be realized.

In the present embodiment, the distal end 25B of the valve body 25 is rotatable about the base portion 25A side of the valve body 25. Even when the axial deviation of the valve body 25 occurs, the valve body 25 descends while the distal end 25B of the valve body 25 rotates about the base portion 25A side, so that the distal end 25B of the valve body 25 can be easily brought into contact with the valve seat 11b. That is, the inclination range that can be handled when the valve body 25 is inclined due to the axial deviation of the valve body 25 is expanded.

In the present embodiment, in the cross section including the rotation axis O, the center of the first virtual circle C1 including the curve of the contour of the curved base protrusion 44b of the contact portion 44 of the rotation support member 42 and the center of the second virtual circle C2 including the curve of the contour of the curved seating surface 25e of the valve body 25 overlap at the same position. Therefore, even when the distal end 25B of the valve body 25 rotates, the curved seating surface 25e moves on the same circumference, so that the valve body 25 can be easily seated reliably on the valve seat 11b. Therefore, even when the axial deviation of the valve body 25 occurs, the effect of suppressing the valve leakage is high.

In the present embodiment, the base 44a of the rotation support member 42 is provided with a curved base protrusion 44b protruding toward the base portion 25A of the valve body 25. The base portion 25A of the valve body 25 has the reduced diameter portion 25d in which the recess for sliding 25d1 fitted to the base protrusion 44b is formed as a curved portion at a surface on a side in contact with the base 44a of the rotation support member 42. Therefore, as compared with a case where a recess is provided on the base 44a side, it is not necessary to partially reduce the thickness of the base 44a, so that the strength of the base 44a does not decrease.

### <Other Embodiments>

Although the disclosure has been described with reference to the above disclosed embodiment, it should not be understood that the description and drawings constituting a part of this disclosure limit the disclosure.

### (Modification)

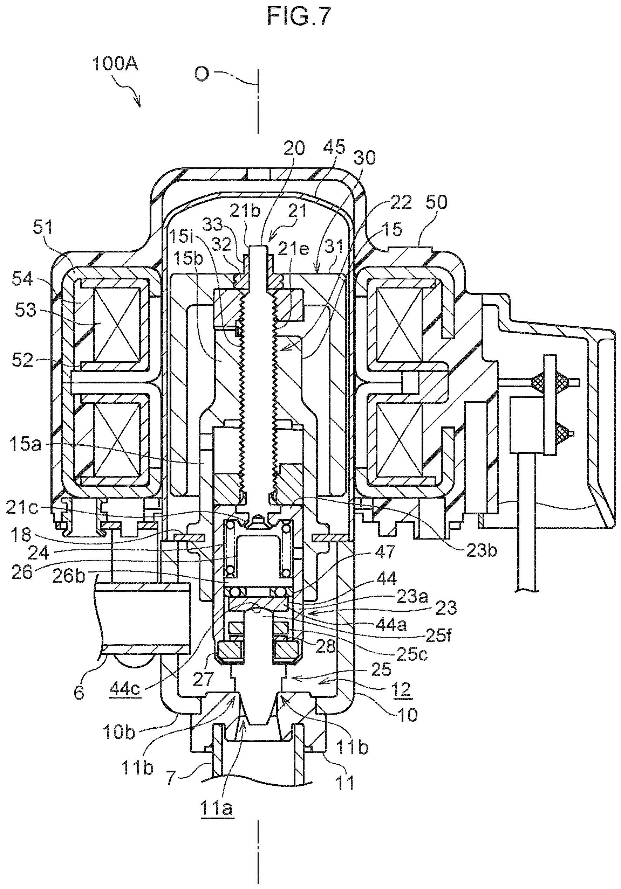

For example, in the disclosure, as in an electric valve 100A according to a modification illustrated in Fig. 7, the base portion 25A of the valve body 25 may be provided with a curved sliding protrusion 25f protruding toward the surface at the side in contact with the base 44a of the rotation support member 42. The base 44a of the rotation support member 42 may have a curved base recess 44c fitted to the sliding protrusion 25f at a surface on a side supporting the base portion 25A of the valve body 25.

Even in the case of the electric valve 100A in Fig. 7, the distal end 25B of the valve body 25 is rotatable by the sliding protrusion 25f and the curved base recess 44c to be fitted. Since other configurations in the modification are similar to the members having the same names in the present embodiment illustrated in Figs. 1 to 6, redundant description will be omitted. Also in the modification, similarly to the case of the present embodiment, the electric valve 100A having excellent flow rate controllability can be realized.

In a case where the recess for sliding 25d1 fitted to the protruding portion of the base 44a is provided on the base portion 25A side, it is necessary to provide the reduced diameter portion 25d at the end portion of the base portion 25A on the base 44a side in order to secure the movable range of the base portion 25A of the valve body 25 on the rotating side. The reduced diameter portion 25d has a thickness equal to or larger than the depth of the recess for sliding 25d1. That is, the length of the base portion 25A is extended by the amount of the reduced diameter portion 25d. The reduced diameter portion 25d is often obtained from the viewpoint of suppressing a decrease in strength of the base portion 25A due to the recess for sliding 25d1.

Therefore, when the curvature radii of the recesses are the same, the length of the valve body 25 can be shortened by an amount that does not require the length of the reduced diameter portion 25d in the modification as compared with the case where the recess for sliding 25d1 is provided on the base portion 25A side. As a result, the entire length of the electric valve 100A can be suppressed. The cost of the member can be reduced. Other effects of the modification are similar to those of the present embodiment.

The disclosure includes various embodiments and the like that are not described above, and the technical scope of the disclosure is defined only by the matters specifying the invention in the claims appropriate from the above description.

### <<Other Aspect>>

The following other aspect is conceptualized from the present specification.

An electric valve according to another aspect includes:
a valve main body having a valve seat;
a tubular can joined to the valve main body;
a rotor disposed inside the can;
a valve shaft that rotates integrally with the rotor;
a guide member into which the valve shaft is inserted;
a valve shaft ascending and descending drive mechanism provided between the guide member and the valve shaft; and
a valve body that is connected to the valve shaft, approaches and separates from the valve seat in conjunction with ascending and descending of the valve shaft, and has a curved seating surface bulging toward the valve seat.

According to the electric valve according to another aspect, it is possible to provide an electric valve having excellent flow rate controllability.

The disclosure of Japanese Patent Application No. 2022-210633 filed on December 27, 2022 is incorporated herein by reference in their entirety.

All documents, patent applications, and technical standards described in this specification are incorporated herein by reference to the same extent as if each document, patent application, and technical standard were specifically and individually indicated to be incorporated by reference.

### Description of Reference Numerals

- 10: valve main body
- 11: valve seat member
- 11a: valve port
- 11b: valve seat
- 12: valve chamber
- 15: guide member (guide stem)
- 15a: large-diameter cylindrical body portion
- 15i: female screw portion
- 20: valve shaft
- 21: male screw member
- 21e: male screw portion
- 22: valve shaft ascending and descending drive mechanism
- 23: valve holder
- 23a: support cylindrical portion
- 23b: ceiling portion
- 25: valve body
- 25A: base portion
- 25B: distal end
- 25a: truncated cone-shaped portion
- 25b: cylindrical body portion
- 25c: flange-shaped portion
- 25d: reduced diameter portion
- 25d1: recess for sliding
- 25e: seating surface
- 25f: sliding protrusion
- 28: washer
- 30: rotor
- 42: rotation support member
- 44: contact portion
- 44a: base
- 44b: base protrusion
- 44c: base recess
- 45: can
- 47: displacement absorbing portion
- 50: stator
- 100, 100A: electric valve
- A1, A2: shaft of valve body
- B 1: center of first virtual circle
- B2: center of second virtual circle
- C1: first virtual circle
- C2: second virtual circle
- O: rotation axis

## Claims

1. An electric valve (100, 100A), comprising:
a valve main body (10) having a valve seat (11b);
a tubular can (45) joined to the valve main body (10);
a rotor (30) disposed inside the can (45);
a valve shaft (20) that rotates integrally with the rotor (30);
a guide member (15) into which the valve shaft (20) is inserted;
a valve shaft ascending and descending drive mechanism (22) having a feeding screw mechanism provided between the guide member (15) and the valve shaft (20); and
a valve body (25) that is connected to the valve shaft (20), moves in a direction approaching or moving away from the valve seat (11b) in conjunction with ascending and descending of the valve shaft (20), and has a curved seating surface (25e) bulging toward the valve seat (11b).

2. The electric valve (100, 100A) according to claim 1, further comprising:
a rotation support member (42) having a curved base (44a) that supports a base portion (25A) of the valve body (25) such that a distal end (25B) of the valve body (25) is rotatable about the base portion (25A) side of the valve body (25).

3. The electric valve (100) according to claim 2, wherein:
in a cross section including a rotation axis (O), a center (B 1) of a first virtual circle (C1) including a curve of a contour of the curved base (44a) of the rotation support member (42) and a center (B2) of a second virtual circle (C2) including a curve of a contour of the curved seating surface (25e) of the valve body (25) overlap at a same position.

4. The electric valve (100A) according to claim 2 or 3, wherein:
the base portion (25A) of the valve body (25) is provided with a curved sliding protrusion (25f) protruding toward a surface at a side in contact with the curved base (44a) of the rotation support member (42), and
the curved base (44a) of the rotation support member (42) has a curved base recess (44c) fitted to the curved sliding protrusion (25f) at a surface on a side supporting the base portion (25A) of the valve body (25).

5. The electric valve (100) according to claim 2 or 3, wherein:
the curved base (44a) of the rotation support member (42) is provided with a curved base protrusion (44b) protruding toward the base portion (25A) of the valve body (25), and
the base portion (25A) of the valve body (25) has a reduced diameter portion (25d) in which a recess for sliding (25d1) fitted to the curved base protrusion (44b) is formed at a surface on a side in contact with the curved base (44a) of the rotation support member (42).

6. The electric valve (100, 100A) according to any one of claims 1 to 5, further comprising:
a stator (50) that is attached to an outer side of the can (45) and rotationally drives the rotor (30).
